# EUROPÄISCHE PATENTANMELDUNG

(11) **EP 3 542 694 A1**
(43) Veröffentlichungstag der Anmeldung: **25.09.2019**
(21) Anmeldenummer: 18163242.3
(22) Anmeldetag: 22.03.2018
(51) Int. Cl.: A47L 9/24

(54) **STAUBSAUGERSCHLAUCHADAPTER**

(71) Anmelder: Hilti Aktiengesellschaft, 9494 Schaan (LI)
(72) Erfinder: Hanslmeier, Xaver, 87600 Kaufbeuren (DE); Ohlendorf, Oliver, 86899 Landsberg (DE)
(74) Vertreter: Hilti Aktiengesellschaft Corporate Intellectual Property

(57) **Zusammenfassung**

Staubsaugerschlauchadapter zum Anschluss an einen Staubsaugerschlauch eines Nass- und Trockensaugers, wobei der Staubsaugerschlauch ein sich in Längsrichtung erstreckendes inneres Lumen aufweist, wobei innerhalb des Staubsaugerschlauchadapters eine Strömungsleitgeometrie ausgebildet ist, mittels der eine während des Betriebs des Nass- und Trockensaugers auftretende Saugströmung beeinflusst werden kann.

## Beschreibung

Die vorliegende Erfindung betrifft einen Staubsaugerschlauchadapter zum Anschluss an einen Staubsaugerschlauch eines Nass- und Trockensaugers, wobei der Staubsaugerschlauch ein sich in Längsrichtung erstreckendes inneres Lumen aufweist.

Staubsaugerschlauchadapter der eingangs genannten Art sind grundsätzlich aus dem Stand der Technik bekannt, beispielsweise in Form von Anschlussadaptern, mittels derer ein Staubsaugerschlauch an einen Nass- und Trockensauger angeschlossen werden kann. Die vorliegende Erfindung schafft allerdings eine neue Gattung von Staubsaugerschlauchadaptern.

Es ist Aufgabe der vorliegenden Erfindung, einen Staubsaugerschlauchadapter bereitzustellen, der eine Erhöhung eines Gesamtwirkungsgrads eines Nass- und Trockensaugers zumindest begünstigt.

Die Aufgabe wird dadurch gelöst, dass innerhalb des Staubsaugerschlauchadapters eine Strömungsleitgeometrie ausgebildet ist, mittels der eine während des Betriebs des Nass- und Trockensaugers auftretende Saugströmung beeinflusst werden kann.

Die Erfindung schließt die Erkenntnis ein, dass ein Staubsaugerschlauch, insbesondere in Form eines Spiralschlauchs, durch seine Geometrie vergleichsweise hohe Druck- und Strömungsverluste verursacht. Diese Verluste werden in erster Linie durch hohe Wandreibung und Randverwirbelung quer zur Schlauchachse hervorgerufen. Diese Verluste beeinträchtigen den Gesamtwirkungsgrad eines Nass- und Trockensaugers erheblich.

Durch die Erfindung wird nunmehr ein Staubsaugerschlauchadapter geschaffen, der vorzugsweise zwischen zwei Staubsaugerschlauchabschnitte eingefügt werden kann, der aufgrund seiner Strömungsleitgeometrie eine Längswirbelform und eine Zentrierung der Saugströmung begünstigt und somit einen vergleichsweise verlustarmen Medientransport ermöglicht. Vorteilhafterweise können mehrere Staubsaugerschlauchadapter in einen Staubsaugerschlauch eingebunden werden, um eine etwaig abgeschwächte Längsverwirbelung lokal zu erneuern.

Es hat sich als vorteilhaft herausgestellt, wenn die Strömungsleitgeometrie einen zentralen Leitkörper aufweist. Der zentrale Leitkörper kann koaxial zur Längsrichtung des Staubsaugerschlauchadapters angeordnet sein.

Es hat sich als vorteilhaft herausgestellt, wenn der zentrale Leitkörper als Vollkörper ausgebildet ist. Alternativ kann der zentrale Leitkörper seinerseits einen Strömungskanal aufweisen. Vorzugsweise ist ein solcher Strömungskanal koaxial zum zentralen Leitkörper und somit koaxial zur Längsrichtung des Staubsaugerschlauchadapters angeordnet.

In einer besonders bevorzugten Ausgestaltung weist die Strömungsleitgeometrie eine Mehrzahl von Speichen auf, die sich vorzugsweise in Radialrichtung nach innen erstrecken.

Es hat sich als vorteilhaft herausgestellt, wenn sich die Strömungsleitgeometrie über die Gesamtlänge des Staubsaugerschlauchadapters erstreckt.

Die Strömungsleitgeometrie kann einen sonnenradförmigen oder radkreuzförmigen Querschnitt aufweisen.

In einer besonders bevorzugten Ausgestaltung ist der Staubsaugerschlauchadapter als Zwischenadapter ausgebildet. Mit anderen Worten, es kann beidseitig des Staubsaugerschlauchadapters jeweils ein Staubsaugerschlauchabschnitt angeschlossen werden. Somit ist auch eine Kaskade von mehreren Staubsaugerschlauchadaptern, vorzugsweise jeweils voneinander beabstandet, innerhalb ein und desselben Staubsaugerschlauchs möglich.

Alternativ zu der Ausgestaltung als Zwischenadapter kann der Staubsaugerschlauchadapter als endständiger Adapter ausgebildet sein. In diesem Fall ist beispielsweise eine Ausgestaltung als Düse möglich.

In einer weiteren bevorzugten Ausgestaltung weist der Staubsaugerschlauchadapter ein Halteelement auf. Das Halteelement ist vorzugsweise in Form eines flexiblen Halterings ausgebildet. Ein als Zwischenadapter ausgebildeter Staubsaugerschlauchadapter kann zwei gegenüberliegende Halteelemente aufweisen. Vorzugsweise ist, wenn der Staubsaugerschlauchadapter als endständiger Adapter ausgebildet ist, lediglich ein Halteelement in Form eines flexiblen Halterings vorgesehen.

In einer weiteren bevorzugten Ausgestaltung ist der Staubsaugerschlauchadapter zweischalig ausgebildet. Dies ermöglicht eine besonders leichte Reinigung eines Schlauchsystems mit Staubsaugerschlauch und Staubsaugerschlauchadapter.

Vorzugsweise ist der Staubsaugerschlauchadapter aus Kunststoff gefertigt.

Die Erfindung wird ebenfalls gelöst durch einen Staubsaugerschlauch zum Anschluss an einen Nass- und Trockensauger, wobei an dem Staubsaugerschlauch wenigstens ein Staubsaugerschlauchadapter nach einem der vorangehenden Ansprüche angeordnet oder anordenbar ist.

Der oder die Staubsaugerschlauchadapter können dauerhaft an dem Staubsaugerschlauch befestigt sein.

Vorzugsweise ist der Staubsaugerschlauch als Spiralschlauch ausgebildet.

Die Erfindung wird ebenfalls gelöst durch einen Staubsaugerschlauch mit ein oder mehreren Staubsaugerschlauchadaptern der vorbeschriebenen Art.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein erstes bevorzugtes Ausführungsbeispiel eines erfindungsgemäßen Staubsaugerschlauchadapters angebracht an einem Staubsaugerschlauch;
- Fig. 2: den Staubsaugerschlauchadapter der Fig. 1 in angebrachtem und gelöstem Zustand;
- Fig. 3: den Staubsaugerschlauchadapter der Figuren 1 und 2 im Querschnitt;
- Fig. 4: den Staubsaugerschlauchadapter der Fig. 3 in einer perspektivischen Darstellung;
- Fig. 5: einen Querschnitt durch das durch den Staubsaugerschlauchadapter der vorangehenden Figuren zur Verdeutlichung des Strömungsverhaltens;
- Fig. 6: einen Querschnitt eines zweiten Ausführungsbeispiels eines erfindungsgemäßen Staubsaugerschlauchadapters; und
- Fig. 7: einen Querschnitt durch ein drittes bevorzugtes Ausführungsbeispiel eines erfindungsgemäßen Staubsaugerschlauchadapters.

### Ausführungsbeispiele:

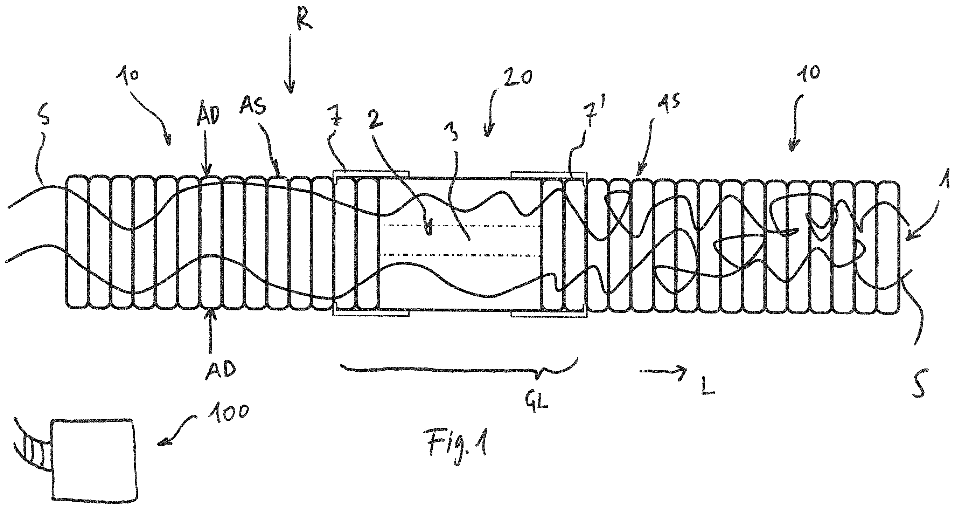

Ein bevorzugtes Ausführungsbeispiel einer erfindungsgemäßen Vorrichtung 10 ist in Fig. 1 dargestellt.

Ein Staubsaugerschlauchadapter 20 zum Anschluss an einen Staubsaugerschlauch 10 eines Nass- und Trockensaugers 100 ist in Fig. 1 dargestellt. Der Staubsaugerschlauch 10 weist ein sich in Längsrichtung L erstreckendes inneres Lumen 1 auf.

Innerhalb des Staubsaugerschlauchadapters 20 ist erfindungsgemäß eine Strömungsleitgeometrie 2 ausgebildet, mittels der eine während des Betriebs des Nass- und Trockensaugers 100 auftretende Saugströmung S innerhalb des Staubsaugerschlauchs 10 beeinflusst werden kann.

Zunächst soll erwähnt werden, dass der Staubsaugerschlauchadapter 20 als Zwischenadapter ausgebildet ist, d.h. beidseitig des Staubsaugerschlauchadapters 20 (in Fig. 1 links und rechts) ist jeweils ein Abschnitt des Staubsaugerschlauchs 10 angeschlossen.

Eine auf der rechten Seite des Staubsaugerschlauchadapters 20 vorherrschende Saugströmung S ist vergleichsweise stark verwirbelt, d.h. insbesondere tritt eine starke Randverwirbelung quer zur Längsrichtung L des Staubsaugerschlauchs 10 auf. Dies führt zu einer negativen Beeinflussung des Gesamtwirkungsgrads des Nass- und Trockensaugers 100. Durch den Staubsaugerschlauchadapter 20, hier beispielsweise mit einem zentralen Leitkörper 3 ausgestattet, wird eine Verwirbelung quer zur Schlauchachse deutlich vermindert und in eine bevorzugte Längswirbelform, die einen Verlust am Medientransport ermöglicht, überführt.

Auf der linken Seite des Staubsaugerschlauchadapters 20 setzt sich diese vorteilhafte Längswirbelform weiter fort. Um eine etwaig erneut auftretende Querverwirbelung strömungsabwärts zu vermindern, kann in den Staubsaugerschlauch 10 ein weiterer Staubsaugerschlauchadapter (nicht gezeigt) eingebunden werden.

Der als Zwischenadapter ausgebildete Staubsaugerschlauchadapter 20 verfügt über zwei Halteelemente in Form flexibler Halteringe 7, 7', die über einen jeweiligen Außendurchmesser AD des Staubsaugerschlauchs 10 übergestülpt sind.

In Fig. 1 ist der Staubsaugerschlauch 10 als Spiralschlauch ausgebildet. Der Staubsaugerschlauch 10 weist über seine Länge einen konstanten Außendurchmesser AD auf. Dies unter Nichtberücksichtigung der Oberflächenriffelung des als Spiralschlauch ausgebildeten Staubsaugerschlauchs 10.

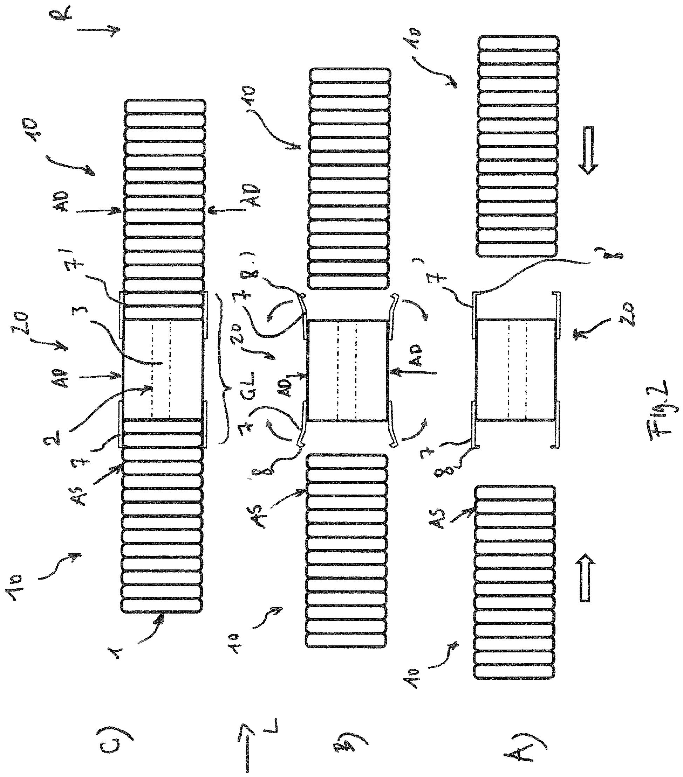

Mit Bezug auf Fig. 2 soll nun das Anbringen eines Staubsaugerschlauchadapters 20 an einem Staubsaugerschlauch 10 dargestellt werden.

Fig. 2A zeigt mittig den Staubsaugerschlauchadapter 20 mit zwei Halteelementen in Form flexibler Halteringe 7, 7'. Die Halteringe 7, 7' weisen jeweils eine umlaufende Krempe 8, 8' auf, die in eine auf der Schlauchaußenseite AS befindliche Riffelung des Spiralschlauchs eingreifen können.

Durch Einschieben der jeweiligen Abschnitte des Staubsaugerschlauchs 10 in den Staubsaugerschlauchadapter 20, dies ist in Fig. 2B dargestellt, weiten sich die jeweiligen Halteringe 7, 7' auf und kommen, wenn die jeweiligen Schlauchenden vollständig in den Staubsaugerschlauchadapter 20 eingeschoben sind, im Sinne einer Rastverbindung auf der Schlauchaußenseite AS zur Ruhe. Die Halteringe 7, 7' können derart reversibel flexibel ausgebildet sein, dass sie sich lediglich unter hohem Krafteinsatz auf den Staubsaugerschlauch 10 aufschieben lassen.

Alternativ oder zusätzlich kann für jeden der Halteringe 7, 7' oder auch für den Staubsaugerschlauchadapter 20 in Gänze eine Überwurfhülse (nicht dargestellt) vorgesehen sein, die nach Anbringen des Staubsaugerschlauchadapters 20 über diesen geschoben wird, um ein Aufweiten der Halteringe 7, 7' zu verhindern.

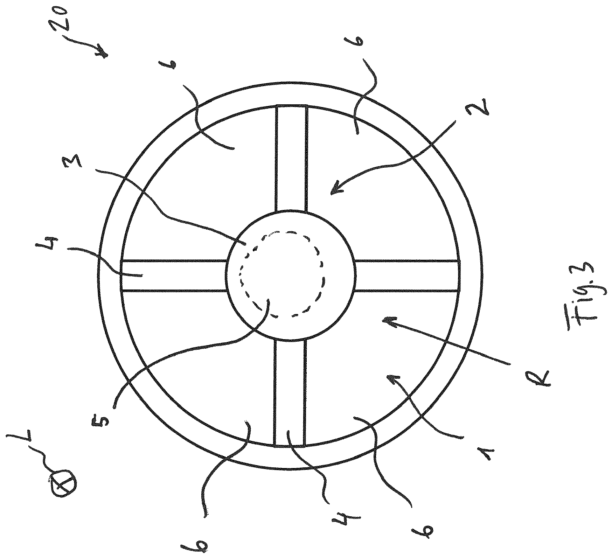

Fig. 3 zeigt nunmehr einen Querschnitt eines bevorzugten Ausführungsbeispiels eines erfindungsgemäßen Staubsaugerschlauchadapters. Der Staubsaugerschlauchadapter 20 weist eine Strömungsleitgeometrie 2 auf, die vorliegend über vier Speichen 4 verfügt, die sich in Radialrichtung R nach innen erstrecken. Weiterhin weist die Strömungsleitgeometrie 2 einen zentralen Leitkörper 3 auf, der koaxial zur Längsrichtung L des Staubsaugerschlauchadapters 20 angeordnet ist. Die Speichen 4 dienen nicht notwendigerweise alleine der Strömungsführung, sondern halten auch den zentralen Leitkörper 3 in seiner koaxialen Position.

Beim bevorzugten Ausführungsbeispiel der Fig. 3 ist der zentrale Leitkörper 3 als Vollkörper ausgebildet. Alternativ, dies sei durch die gestrichelte Linie angedeutet, kann der zentrale Leitkörper 3 seinerseits einen inneren Strömungskanal aufweisen.

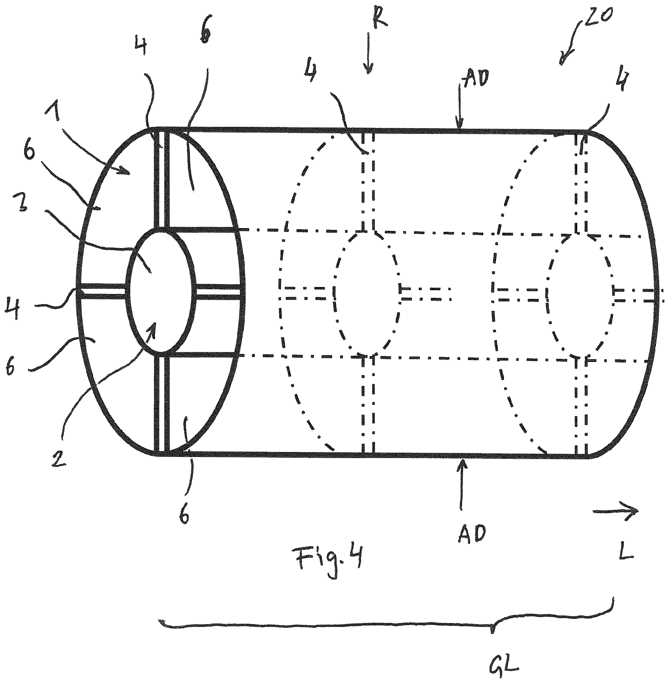

Wie der Fig. 3 entnommen werden kann, weist die Strömungsleitgeometrie 2 einen radkreuzförmigen Querschnitt auf. Dadurch wird das innere Lumen 1 in vier Bypasskanäle 6 mit gleichem Querschnitt unterteilt. Die Bypasskanäle müssen nicht notwendigerweise einen gleich großen Querschnitt aufweisen. Durch geeignete Stellung der Speichen 4 können beispielsweise zwei größere bzw. zwei kleinere Bypasskanäle 6 konstruktiv ausgebildet sein. Die vier Bypasskanäle 6 sind nicht voneinander strömungsgetrennt, da sich die vier Speichen 4 nicht über die Gesamtlänge GL des Staubsaugerschlauchadapters 20 erstrecken, vgl. Figur 4.

Fig. 4 zeigt nunmehr eine perspektivische Darstellung des Staubsaugerschlauchadapters 20 der Fig. 3. Wie der Fig. 4 entnommen werden kann, erstreckt sich der zentrale Leitkörper 3 der Strömungsleitgeometrie 2 über die Gesamtlänge des Staubsaugerschlauchadapters 20.

Gut zu erkennen ist, dass die Speichen 4 lediglich zur Abstützung des Leitkörpers 3 vorgesehen sein und sich nicht über die Gesamtlänge GL des Staubsaugerschlauchadapters 20 erstrecken.

In einer hier nicht dargestellten Variante können sich die Speichen 4 über die Gesamtlänge GL des Staubsaugerschlauchadapters 20 erstrecken. Durch den zentralen Leitkörper 3 und die Mehrzahl von Speichen 4 wird das innere Lumen 1 dann in vier diskrete Bypasskanäle 6 unterteilt, die sich jeweils über die Gesamtlänge GL des Staubsaugerschlauchadapters 20 erstrecken.

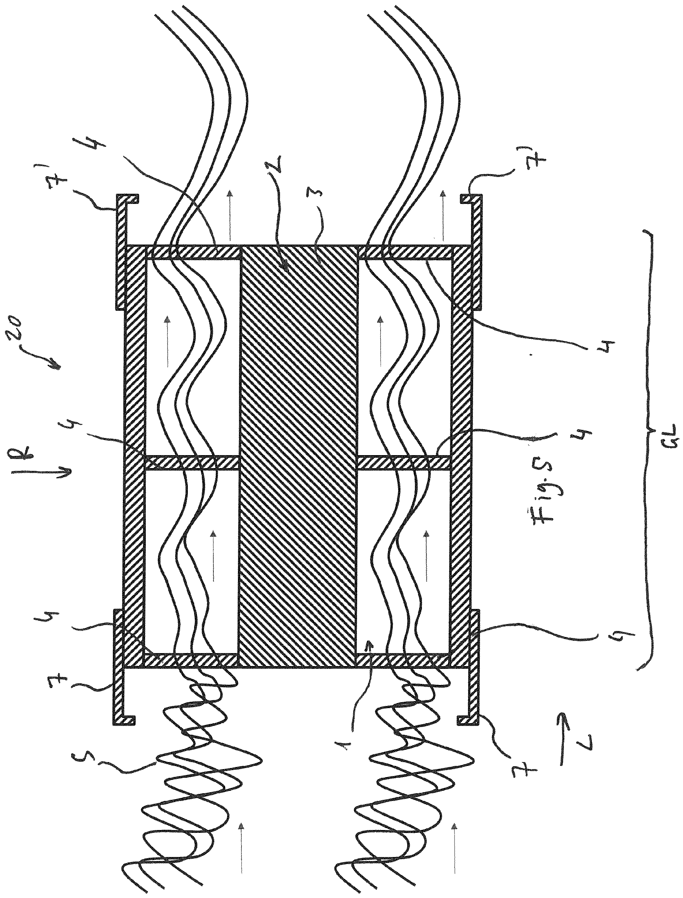

Fig. 5 zeigt nunmehr einen Querschnitt des Staubsaugerschlauchadapters 20 der Fig. 5. Gut zu erkennen ist der zentrale Leitkörper 3, der koaxial zur Längsrichtung L des Staubsaugerschlauchadapters 20 angeordnet und als Vollkörper ausgebildet ist. Der als Vollkörper ausgebildete zentrale Leitkörper 3 erstreckt sich über die Gesamtlänge GL des Staubsaugerschlauchadapters 20 (mit Ausnahme der überstehenden Halteringe 7, 7').

Gut zu erkennen in Fig. 5 ist, dass die jeweiligen Speichen 4 im Wesentlichen eine Stützwirkung für den Leitkörper 3 realisieren. Eine Strömungsleitwirkung der Speichen 4 ist im vorliegenden Ausführungsbeispiel eher zu vernachlässigen. Gut zu erkennen ist jedenfalls, dass eine auf der linken Seite eintretende stark verwirbelte Saugströmung S im Zuge ihres Durchtritts durch den Staubsaugerschlauchadapter 20 in Richtung einer vorteilhaften Längswirbelströmung verändert wird.

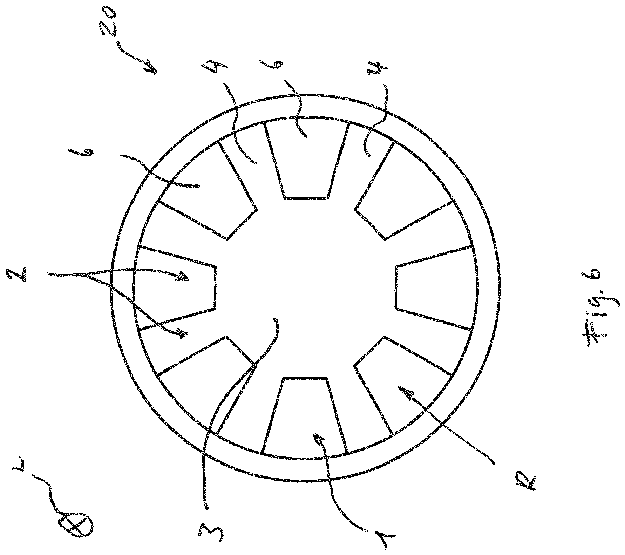

Fig. 6 zeigt ein weiteres bevorzugtes Ausführungsbeispiel eines Staubsaugerschlauchadapters 20 im Querschnitt. Gut zu erkennen ist, dass die Strömungsleitgeometrie 2 einen sonnenradförmigen Querschnitt aufweist. Sie ist dabei aus einem zentralen Leitkörper 3, der als Vollkörper ausgebildet ist, sowie einer Mehrzahl radialer Speichen 4 gebildet. Im gezeigten Ausführungsbeispiel sind somit insgesamt sechs Bypasskanäle 6 vorhanden.

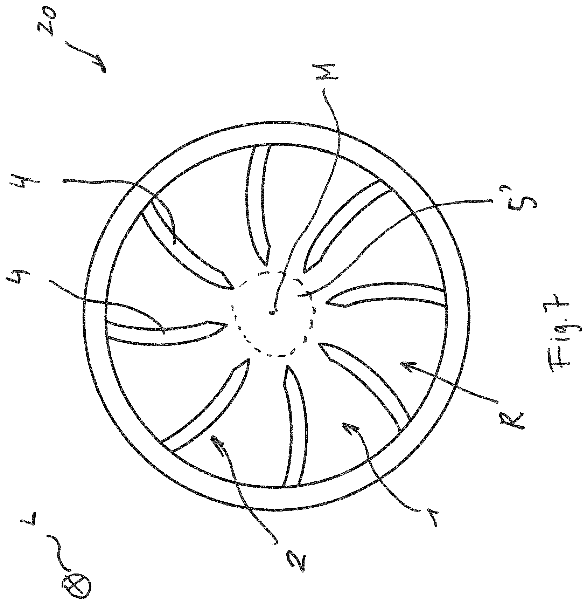

Ein weiteres bevorzugtes Ausführungsbeispiel eines erfindungsgemäßen Staubsaugerschlauchadapters 20 ist in Fig. 7 dargestellt. Die Strömungsleitgeometrie 2 ist durch eine Mehrzahl von Speichen 4 gebildet, die sich in Radialrichtung R nach innen erstrecken und dabei leicht gekrümmt sind. Beispielhaft sind acht radial nach innen gerichtete Speichen 4 vorgesehen.

Wie der Fig. 7 entnommen werden kann, erstrecken sich die Speichen nicht bis zum Mittelpunkt M des Staubsaugerschlauchadapters 20. Dadurch verbleibt koaxial-mittig innerhalb des Staubsaugerschlauchadapters 20 ein virtueller Strömungskanal 5'.

Die Mehrzahl von Speichern 4 kann sich - dies ist aus Fig. 7 nicht ersichtlich - über eine Gesamtlänge GL des Staubsaugerschlauchadapters 20 erstrecken.

### Bezugszeichenliste

- 1: inneres Lumen
- 2: Strömungsleitgeometrie
- 3: zentraler Leitkörper
- 4: Speiche
- 5, 5': Strömungskanal
- 6: Bypasskanal
- 7, 7': Haltering
- 8, 8': Krempe
- 10: Staubsaugerschlauch
- 20: Staubsaugerschlauchadapter
- 100: Nass- und Trockensauger

- AD: Außendurchmesser
- AS: Schlauchaußenseite
- GL: Gesamtlänge
- ID: Innendurchmesser
- L: Längsrichtung
- M: Mittelpunkt
- R: Radialrichtung
- S: Saugströmung

## Patentansprüche

1. Staubsaugerschlauchadapter (20) zum Anschluss an einen Staubsaugerschlauch (10) eines Nass- und Trockensaugers (100), wobei der Staubsaugerschlauch (10) ein sich in Längsrichtung (L) erstreckendes inneres Lumen (1) aufweist,
**dadurch gekennzeichnet, dass** innerhalb des Staubsaugerschlauchadapters (20) eine Strömungsleitgeometrie (2) ausgebildet ist, mittels der eine während des Betriebs des Nass- und Trockensaugers (100) auftretende Saugströmung (S) beeinflusst werden kann.

2. Staubsaugerschlauchadapter (20) nach Anspruch 1,
**dadurch gekennzeichnet, dass** die Strömungsleitgeometrie (2) einen zentralen Leitkörper (3) aufweist, der koaxial zur Längsrichtung (L) des Staubsaugerschlauchadapters (20) angeordnet ist.

3. Staubsaugerschlauchadapter (20) nach Anspruch 2,
**dadurch gekennzeichnet, dass** der zentrale Leitkörper (3) als Vollkörper ausgebildet ist.

4. Staubsaugerschlauchadapter (20) nach Anspruch 2,
**dadurch gekennzeichnet, dass** der zentrale Leitkörper (3) seinerseits einen Strömungskanal (5) aufweist.

5. Staubsaugerschlauchadapter (20) nach einem der vorangehenden Ansprüche,
**dadurch gekennzeichnet, dass** sich die Strömungsleitgeometrie (2) eine Mehrzahl von Speichen (4) aufweist, die sich in Radialrichtung (R) nach innen erstrecken.

6. Staubsaugerschlauchadapter (20) nach einem der vorangehenden Ansprüche,
**dadurch gekennzeichnet, dass** sich die Strömungsleitgeometrie (2) über die Gesamtlänge (GL) des Staubsaugerschlauchadapters (20) erstreckt.

7. Staubsaugerschlauchadapter (20) nach einem der vorangehenden Ansprüche,
**dadurch gekennzeichnet, dass** sich die Strömungsleitgeometrie (2) einen sonnenradförmigen oder radkreuzförmigen Querschnitt aufweist.

8. Staubsaugerschlauchadapter (20) nach einem der vorangehenden Ansprüche,
**dadurch gekennzeichnet, dass** der Staubsaugerschlauchadapter (20) als Zwischenadapter ausgebildet ist.

9. Staubsaugerschlauchadapter (20) nach einem der Ansprüche 1 bis 7,
**dadurch gekennzeichnet, dass** der Staubsaugerschlauchadapter (20) als endständiger Adapter ausgebildet ist.

10. Staubsaugerschlauchadapter (20) nach einem der vorangehenden Ansprüche,
**dadurch gekennzeichnet, dass** der Staubsaugerschlauchadapter (20) ein Halteelement, vorzugsweise in Form eines flexiblen Halterings (7, 7'), aufweist.

11. Staubsaugerschlauchadapter (20) nach einem der vorangehenden Ansprüche,
**dadurch gekennzeichnet, dass** der Staubsaugerschlauchadapter (20) zweischalig ausgebildet ist.

12. Staubsaugerschlauchadapter (20) nach einem der vorangehenden Ansprüche,
**dadurch gekennzeichnet, dass** der Staubsaugerschlauchadapter (20) aus Kunststoff besteht.

13. Staubsaugerschlauch (10) zum Anschluss an einen Nass- und Trockensauger (100), wobei an dem Staubsaugerschlauch (10) wenigstens ein Staubsaugerschlauchadapter (20) nach einem der vorangehenden Ansprüche angeordnet oder anordenbar ist.

14. Staubsaugerschlauch (10) nach Anspruch 15,
**dadurch gekennzeichnet, dass** der Staubsaugerschlauchadapter (20) dauerhaft an dem Staubsaugerschlauch (10) befestigt ist.

15. Staubsaugerschlauch (20) nach Anspruch 13 oder 14,
**dadurch gekennzeichnet, dass** der Staubsaugerschlauch (10) als Spiralschlauch ausgebildet ist.
